# DEMANDE DE BREVET EUROPEEN

(11) **EP 4 280 560 A1**
(43) Date de publication de la demande: **22.11.2023**
(21) Numéro de dépôt: 23174029.1
(22) Date de dépôt: 17.05.2023
(51) Int. Cl.: H04L 45/28, H04L 45/02

(54) **PROCÉDÉ POUR DÉTECTER DES ANOMALIES DE ROUTAGE ENTRE SYSTÈMES AUTONOMES**

(30) Priorité: 17.05.2022 FR 2204677
(71) Demandeur: Orange, 92130 Issy-les-Moulineaux (FR)
(72) Inventeur: FEJZA, Doris, 92326 Chatillon Cedex (FR); LAMBERT, Anthony, 92326 Chatillon Cedex (FR)
(74) Mandataire: Plasseraud IP

(57) **Abrégé**

Procédé de détection d'une anomalie dans des chemins pour le routage de données à destination d'un préfixe d'adresses (P) dans un réseau composé de systèmes autonomes (AS1, AS2, AS3, AS4, AS5), les chemins étant annoncés à un système autonome local (AS4) par des systèmes autonomes voisins (AS2, AS3, AS5), comprenant :
/a/ recevoir pendant un laps de temps des informations représentatives d'au moins une partie des chemins ;
/b/ générer une matrice comprenant des éléments représentatifs de tronçons de chemin (I₄₂, I₂₁, I₄₃, I₃₁, I₂₅, I₅₁) reliant respectivement des paires de systèmes autonomes se trouvant sur les chemins ;
/c/ réitérer les étapes /a/ et /b/ afin d'obtenir une séquence de matrices selon l'étape /b/ ;
/d/ analyser une similarité entre les matrices, et
/e/ dans un cas où au moins une des matrices diffère des autres matrices, détecter une anomalie de routage.

## Description

### Domaine technique

La présente divulgation relève du domaine du routage de données entre systèmes autonomes d'un réseau étendu tel qu'Internet par exemple.

Plus particulièrement, la présente divulgation porte sur un procédé pour détecter une anomalie dans des chemins pour le routage de données à destination d'un préfixe d'adresses (d'adresses IP par exemple).

### Technique antérieure

Un réseau étendu tel que le réseau Internet par exemple est composé de systèmes autonomes, ensembles de réseaux et routeurs sous contrôle d'un opérateur tel qu'un fournisseur de service Internet, un centre de recherche, ou une université.

Pour maintenir l'accessibilité et la connectivité globale de l'Internet, les systèmes autonomes doivent s'interconnecter et échanger de l'information relative à des réseaux dont différents opérateurs sont responsables, permettant aux systèmes autonomes de s'envoyer du trafic sous forme de paquets de données.

Les systèmes autonomes sont interconnectés et échangent des informations de routage sur la base d'un protocole d'échange de route nommé BGP (pour « Border Gateway Protocol »).

L'interconnexion entre différents systèmes autonomes n'est pas le fruit du hasard et repose souvent sur des accords bilatéraux entre les opérateurs. En cas de pluralité de chemins possibles pour le routage de données vers une même destination, i.e. vers un même préfixe d'adresses (adresses IP par exemple pour « Internet Protocol »), la sélection du chemin que le trafic prend résulte de l'examen séquentiel des préférences des systèmes autonomes par lesquels le trafic passe, ainsi que des préférences des systèmes autonomes voisins.

Les chemins pour le routage de données sont construits comme une somme de décisions locales, et chaque système autonome choisit localement et indépendamment des autres systèmes autonomes un « meilleur » chemin vers une destination donnée.

Le choix d'un chemin entre systèmes autonomes est complexe, et l'information de routage n'est pas diffusée dans le réseau mais annoncée de voisin à voisin. La conséquence en est que chaque système autonome n'a qu'une vision partielle des chemins de routage existants. Un système autonome donné sait de quelle manière il peut joindre une destination. Par contre, ce système autonome ignore comment les autres systèmes autonomes le joignent effectivement et encore moins comment les autres systèmes autonomes se joignent entre eux.

Un système autonome peut implémenter différentes actions afin d'influer sur le trafic, notamment des actions modifiant des attributs BGP auxquels il a accès, ou des actions modifiant l'annonce des préfixes d'adresses dont il est responsable afin d'influencer en sa faveur les chemins construits par d'autres systèmes autonomes.

II peut donc être difficile d'anticiper les chemins que le trafic prend.

Les annonces de chemins sont basées sur la confiance, et il y a peu de moyens de vérifier la véracité d'une annonce.

La fragilité du protocole BGP, son opacité et sa verbosité ont comme conséquence que l'Internet fait face à de nombreux enjeux de sécurité dont le détournement de chemins pour le routage de données. Volontaires ou non, ces détournements peuvent perturber le fonctionnement de services ou permettre de détourner du trafic.

Les chemins de routage peuvent être détournés par « hijack », i.e. par une annonce illégitime de préfixes résultant en un détournement du trafic et l'impact des services associés.

En outre, les chemins de routage peuvent être détournés par des attaques de type « man-in-the-middle », i.e. par l'interception du trafic résultant en un détournement local de trafic sans toutefois perturber l'accessibilité de la destination.

Ces attaques permettent à l'attaquant d'écouter, d'enregistrer et de manipuler le trafic dans l'Internet.

Différents procédés ont été développés afin de détecter des anomalies de routage. Dans ces procédés, des modèles d'apprentissage sont alimentés de message BGP agrégés sur des fenêtres de temps successives afin d'en extraire des caractéristiques statistiques, liées par exemple au volume des données ou à la longueur des attributs AS PATH contenus dans des messages BGP. L'attribut AS PATH indique le cheminement parcouru par un message BGP.

Toutefois, dans ces approches, l'information topologique contenue dans l'attribut AS PATH est perdue. De plus, de telles approches ne permettent pas de détecter de manière efficace des attaques sophistiquées telles que des attaques « man-in-the-middle ».

Ces procédés font généralement usage d'approches supervisées, ce qui nécessite des données correctement étiquetées, ce qui est peu réaliste du fait de la complexité et de l'opacité des messages BGP.

Il existe donc un besoin d'un procédé permettant de faire une analyse non supervisée de données BGP, afin de pouvoir détecter de manière efficace des anomalies dans les chemins pour le routage de données à destination d'un préfixe d'adresses.

### Résumé

A cet effet, il est divulgué un procédé de détection d'une anomalie dans un ensemble de chemins pour le routage de données à destination d'un préfixe d'adresses dans un réseau composé de systèmes autonomes, les chemins étant annoncés à un système autonome local par des systèmes autonomes voisins du système autonome local, le procédé comprenant :
/a/ recevoir pendant un laps de temps des informations représentatives d'au moins une partie de l'ensemble de chemins ;
/b/ générer, à partir des informations reçues, une matrice comprenant des éléments représentatifs de tronçons de chemin de l'ensemble de chemins, les tronçons de chemin reliant respectivement des paires de systèmes autonomes se trouvant sur l'ensemble de chemins ;
Ici réitérer les étapes /a/ et /b/ afin d'obtenir une séquence temporelle de matrices selon l'étape /b/ ;
/d/ analyser une similarité entre les matrices de la séquence, et
/e/ dans un cas où au moins une des matrices de la séquence diffère des autres matrices de la séquence, détecter une anomalie de routage.

Un système autonome est un ensemble de réseaux et de routeurs sous une même autorité administrative.

Différents systèmes autonomes peuvent être interconnectés par des chemins pour transporter du trafic, et des routeurs BGP (pour « Border Gateway Protocol ») mettant en oeuvre un protocole BGP, ayant comme objectif d'échanger des informations de routage et d'accessibilité de réseaux informatiques dont les systèmes autonomes sont responsables.

Un système autonome local peut être un système autonome auquel les chemins sont annoncés.

Un système autonome voisin est un système autonome auquel un système autonome local est connecté directement, c'est-à-dire sans devoir passer par un autre système autonome.

Une paire de systèmes autonomes correspond à deux systèmes autonomes voisins qui se trouvent sur un chemin.

Chaque système autonome peut annoncer dans l'Internet un ou plusieurs préfixes d'adresses relatifs à des préfixes dont il est responsable.

Un préfixe d'adresses indique une plage d'adresses de réseaux.

Un chemin pour le routage de données correspond à un chemin entre systèmes autonomes sur lequel du trafic est acheminé. Un chemin peut avoir comme provenance un système autonome et comme destination un préfixe d'adresses. Le chemin qui relie un système autonome à un préfixe peut passer par d'autres systèmes autonomes.

A chaque système autonome peut être attribué un identifiant unique, appelé « Autonmous System Number » (ASN).

Par exemple, un chemin qui passe dans l'ordre par trois systèmes autonomes nommés AS11, AS1 et AS56 peut être représenté comme [AS11 AS1 AS56].

Un tronçon de chemin correspond à une partie de chemin qui relie respectivement deux systèmes autonomes voisins. Par exemple, un chemin qui passe dans l'ordre par trois systèmes autonomes AS11, AS1 et AS56 comprend deux tronçons de chemin [AS11 AS1] et [AS1 AS56].

BGP est un protocole qui utilise des messages de mise à jour de chemins afin d'annoncer des changements de chemin. Chaque mise à jour agrège une liste des systèmes autonomes requis pour rejoindre un préfixe donné et par lesquels le ou les chemins passent.

Les informations relatives à tous les chemins pour rejoindre un préfixe à partir du système autonome local peuvent être « accumulées » pendant un laps de temps par le système autonome local et être agrégées dans une matrice, permettant une représentation des chemins annoncés au système autonome local.

La matrice comprend des tronçons de chemin qui relient les systèmes autonomes sur un chemin deux par deux. Ainsi, chaque élément de la matrice correspond à un tronçon de chemin.

Une réitération selon l'étape Ici permet d'obtenir une séquence temporelle de matrices, représentatives d'une évolution temporelle des tronçons de chemin qui font partie des chemins annoncés.

L'analyse d'une similarité peut correspondre à une détermination d'un écart entre une matrice donnée et une ou plusieurs parmi les matrices de la séquence de matrices.

Un chemin peut présenter une anomalie lorsque le préfixe correspondant est illégitime ou invalide, ou lorsque les attributs BGP annoncés sont illégitimes ou invalides.

Une anomalie peut être un détournement de chemins de routage par « hijack », i.e. par une annonce illégitime de préfixes résultant en un détournement du trafic et l'impact de services associés.

En outre, une anomalie peut correspondre à une attaque de type « man-in-the-middle », i.e. à l'interception du trafic résultant en un détournement local de trafic sans perturber l'accessibilité de la destination, i.e. du préfixe d'adresse.

Des détournements de chemin peuvent être volontaires ou non, et même être causées par des erreurs humaines ou de machine telles que des pannes de machine ou des comportements anormaux.

La séquence de matrices peut présenter une anomalie lorsqu'il y a un changement soudain pendant un laps de temps dans des éléments d'une ou plusieurs matrices.

La détection d'une anomalie peut correspondre à une classification comme « normal » ou « anomalie » de l'ensemble de chemins ou d'une partie dudit ensemble de chemins.

Le procédé peut être mis en oeuvre pendant une durée limitée ou en continu.

En outre, la séquence des matrices peut comprendre un nombre de matrices déterminé ou variable.

Par exemple, lors de la mise en oeuvre du procédé, la séquence de matrices est mise à jour en y ajoutant des nouvelles matrices de manière réitérée (étape /c/). En même temps, des matrices de la séquence avec la date d'ajout la plus ancienne peuvent être supprimées de la séquence.

Le procédé proposé vise à répondre aux inconvénients cités précédemment et à proposer une mise en oeuvre d'un procédé de détection d'une anomalie dans un ensemble de chemins pour le routage de données à destination d'un préfixe d'adresses dans un réseau composé de systèmes autonomes.

Le procédé permet d'effectuer une analyse spatio-temporelle des informations reçues, en tenant compte de la présence ou de l'absence d'un tronçon de chemin dans l'ensemble de chemins (« analyse spatiale ») ainsi que de l'évolution temporelle des tronçons de chemin (« analyse temporelle »).

Le procédé permet de détecter des anomalies dans les chemins annoncés au système autonome local en identifiant une ou plusieurs matrices qui comportent un ou des éléments (représentatifs de tronçons de chemins) jugés « anormaux ».

Le procédé proposé est innovant sur la mise en oeuvre de l'analyse spatio-temporelle des informations reçues.

Le procédé proposé est, de plus, original en ce qu'il utilise des données non étiquetées et en ce que le procédé n'est pas supervisé, permettant une meilleure généralisation des analyses effectuées.

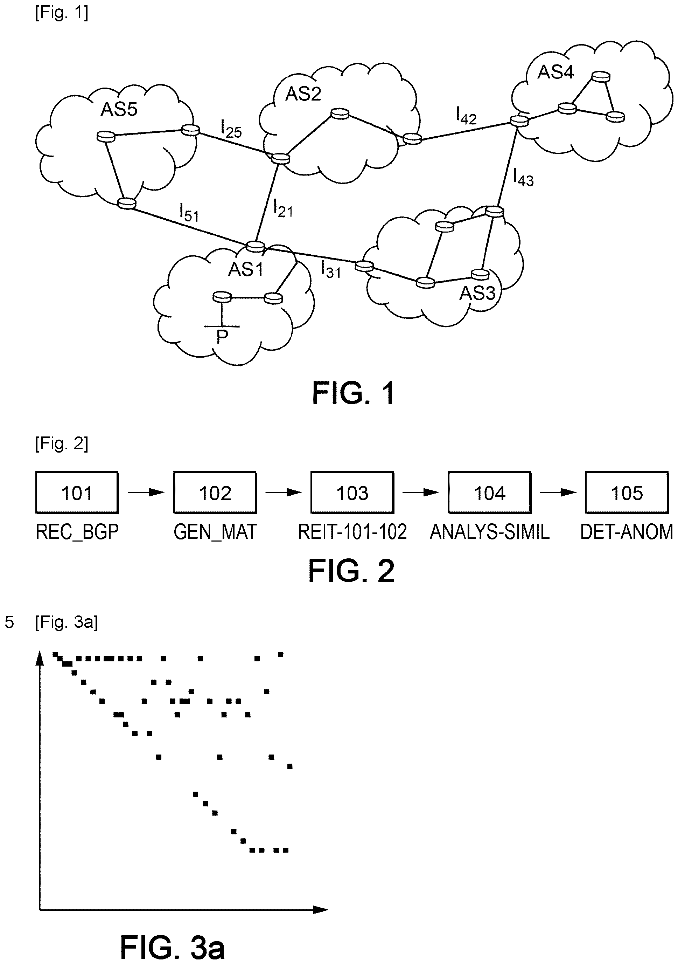

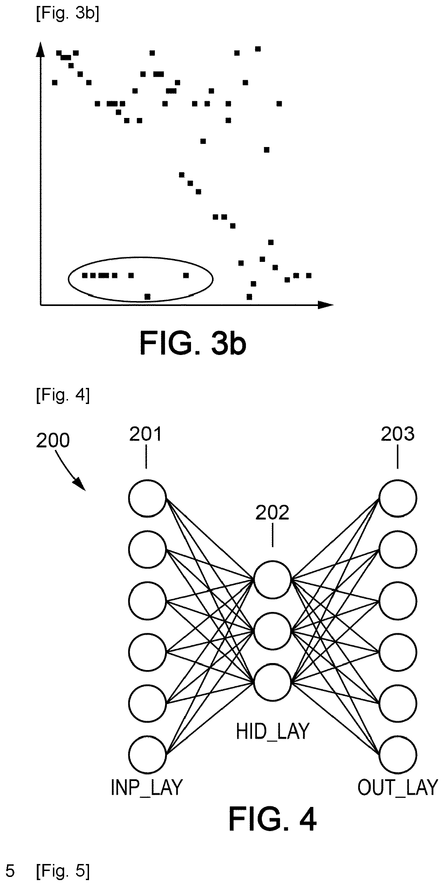

Dans la mise en oeuvre du procédé, aucune connaissance préalable sur les propriétés du système, ex. sur les systèmes autonomes impliqués ou sur la nature des chemins annoncés, n'est requise. Lors de la mise en oeuvre, un dispositif informatique mettant en oeuvre le procédé peut alors apprendre par apprentissage (en mettant en oeuvre par exemple une intelligence artificielle) quels types de matrices représentent respectivement un état « normal » ou une « anomalie ». Un exemple est donné plus loin d'une matrice normale (figure 3a) comparativement à une matrice à anomalie (figure 3b), cette dernière présentant dans l'exemple illustré des coefficients non nuls en-dessous d'une diagonale nulle, alors que la figure 3a ne présente pas ce type de caractéristique de matrice. Une intelligence artificielle peut alors apprendre que le type de matrice illustrée schématiquement sur la figure 3a ne relève pas d'une anomalie *a priori* alors qu'une matrice qui sort de ce profil peut révéler au contraire une anomalie. Après la phase d'apprentissage, une telle intelligence artificielle peut détecter une anomalie dans une matrice qui ne respecte pas un profil standard.

Le procédé considère un seul préfixe à la fois et non pas tous les préfixes d'un système autonome ou un ensemble de préfixes confondus, permettant une analyse ciblée et une détection localisée d'une anomalie.

Lorsqu'une anomalie est détectée, une alerte peut être émise.

Le procédé proposé permet d'améliorer la sécurité dans les réseaux et de mitiger le détournement du trafic dans l'Internet.

Les caractéristiques exposées dans les paragraphes suivants peuvent, optionnellement, être mises en oeuvre. Elles peuvent être mises en oeuvre indépendamment les unes des autres ou en combinaison les unes avec les autres.

Dans un mode de réalisation, l'étape /d/ comprend :
- une estimation d'une tendance moyenne sur des matrices de la séquence temporelle de matrices,
- une estimation d'écart d'une matrice courante de la séquence par rapport à ladite tendance moyenne,
et, à l'étape /e/ :
- si l'écart estimé est au-delà d'un seuil, détecter une anomalie de routage révélée par ladite matrice courante.

Une tendance moyenne peut correspondre à des propriétés ou des comportements présents dans une majorité ou du moins dans une partie des matrices de la séquence de matrices, ou au calcul d'une somme ou d'une somme pondérée des éléments de toutes les matrices ou d'une partie des matrices de la séquence.

En outre, l'estimation d'une tendance moyenne peut prendre en compte des matrices qui ne font pas partie de la présente séquence, mais par exemple d'une séquence déterminée antérieurement.

Une estimation d'écart peut être une détermination quantitative ou qualitative de différences entre les éléments ou une partie des éléments d'une matrice courante et ladite tendance moyenne.

Un seuil peut être prédéterminé ou être déterminé lors de la mise en oeuvre du procédé.

Une valeur d'écart au-delà du seuil peut indiquer une différence significative entre la matrice courante et la tendance moyenne représentative de tronçons de chemin jugés « normaux », et peut donc être interprétée comme une présence d'anomalie.

Dans un mode de réalisation, la matrice déterminée dans l'étape /b/ est à au moins deux dimensions et comprend des éléments, chacun propre à :
- un index de système autonome de départ de tronçon de chemin annoncé, selon une première dimension, et
- à un index de système autonome d'arrivée dudit tronçon de chemin annoncé, selon une deuxième dimension.

Les expressions « système autonome de départ » et « système autonome d'arrivée » peuvent être définis par rapport au système autonome local et par rapport au système autonome qui est responsable du préfixe d'adresses.

Un chemin annoncé peut avoir comme point de départ le système autonome responsable du préfixe, et comme destination le système autonome local. En partant du système autonome responsable du préfixe, le premier système autonome de tronçons de chemin respectifs peut être considéré comme « système autonome de départ », et le second système autonome de tronçons de chemin respectifs peut être considéré comme système autonome d'arrivée.

Par exemple, une matrice peut avoir sur un premier axe comme éléments les systèmes autonomes de départ, et sur un deuxième axe les systèmes autonomes d'arrivé, ou inversement.

Les éléments de la matrice peuvent représenter des tronçons de chemin entre un système autonome de départ donné et un système autonome d'arrivée donné.

Par exemple, les éléments de la matrice peuvent avoir comme valeur « 1 », indiquant qu'un tronçon de chemin fait partie des chemins annoncés, ou « 0 », indiquant qu'un tronçon de chemin ne fait pas partie des chemins annoncés.

Dans un mode de réalisation, il est affecté un nouvel index à chaque système autonome nouvellement découvert dans les annonces desdits tronçons, un index initial étant incrémenté à chaque découverte d'un nouveau système autonome intervenant dans un desdits tronçons.

Les systèmes autonomes peuvent être numérotées de manière consécutive, selon l'ordre dans lequel ils sont « découverts », i.e. dans l'ordre selon lequel ils apparaissent sur les chemins.

Par exemple, un index de « 0 » peut être attribué au premier système autonome découvert (indépendamment de son ASN), un index de « 1 » au deuxième système autonome découvert, etc.

Cette numérotation peut mener à des canevas de matrices récurrents dans différents environnements de systèmes autonomes et de préfixes.

Dans un mode de réalisation, la matrice est à au moins trois dimensions, chaque élément de la matrice étant propre en outre à un type de système autonome d'arrivée, selon une troisième dimension.

La troisième dimension permet d'encoder, outre la présence ou l'absence d'une paire de systèmes autonomes sur un chemin, d'autres caractéristiques dans les matrices, telles que le pays d'origine des systèmes autonomes.

Par exemple, lorsqu'un système autonome d'arrivé d'un tronçon de chemin est situé aux Etats-Unis, l'élément correspondant dans la matrice peut avoir « 2 » comme valeur. Lorsqu'un système autonome d'arrivé d'un tronçon de chemin est situé en Chine, l'élément correspondant dans la matrice peut avoir « 3 » comme valeur, etc.

De plus, la troisième dimension permet d'encoder dans les matrices un ou plusieurs attributs qui caractérisent un tronçon de chemin, indiquant par exemple la nature des systèmes autonomes (client, fournisseur, peer) connectés par un tronçon de chemin donné.

Dans un mode de réalisation, chaque matrice de la séquence est représentée sous forme d'une image à au moins deux dimensions, chaque image comportant des pixels, chaque pixel correspondant à un élément de la matrice.

La représentation de chaque matrice sous forme d'image permet une visualisation du contenu des matrices, ce qui peut faciliter ainsi l'analyse et la détection d'une anomalie.

Une réitération de l'étape Ici permet de créer une succession d'images, i.e. une vidéo, représentant de manière visuelle les chemins annoncés (aspect spatial) et l'évolution temporelle des chemins annoncés au cours du temps (aspect temporel).

Dans un mode de réalisation, chaque pixel a pour coordonnées dans l'image :
- un index de système autonome de départ de tronçon de chemin annoncé, selon un premier axe de coordonnées d'image, et
- un index de système autonome d'arrivée dudit tronçon de chemin annoncé, selon un deuxième axe de coordonnées d'image.

Par exemple, une image peut avoir sur un premier axe comme éléments les systèmes autonomes de départ, et sur un deuxième axe les systèmes autonomes d'arrivé, ou inversement.

Les pixels de l'image peuvent donc représenter des tronçons de chemin entre un système autonome de départ donné et un système autonome d'arrivé donné.

Dans un mode de réalisation, chaque pixel a une couleur fonction dudit type système autonome d'arrivée dudit pixel.

La couleur dudit pixel peut indiquer respectivement la présence ou l'absence d'un tronçon de chemin dans l'ensemble de chemins annoncés.

Par exemple, certains pixels de la matrice peuvent être blancs, indiquant qu'un tronçon de chemin ne fait pas partie des chemins annoncés, ou noirs, indiquant qu'un tronçon de chemin fait partie des chemins annoncés.

Dans un mode de réalisation, les étapes /d/ et /e/ sont réalisées par une intelligence artificielle.

L'intelligence artificielle peut être configurée pour analyser une similarité entre les matrices et à détecter une anomalie.

Lorsque les étapes /d/ et /e/ sont implémentées par une intelligence artificielle, aucune connaissance préalable sur le système n'est requise. L'intelligence artificielle peut s'entraîner et apprendre à identifier une « dynamique BGP normale » et quelles images correspondant à des chemins « normaux » ou « anormaux » respectivement.

Dans un mode de réalisation, l'intelligence artificielle est mise en oeuvre par un auto-encodeur spatio-temporel mettant en oeuvre un apprentissage non supervisé configuré pour détecter une anomalie dans la séquence d'images.

Un auto-encodeur est un réseau de neurones artificiels utilisé pour l'apprentissage non supervisé de caractéristiques discriminantes.

Un auto-encodeur est spécialement adapté pour détecter des anomalies dans des séquences de matrices.

Un auto-encodeur peut prendre comme entrée une matrice d'éléments, et « compresser » la matrice dans une étape intermédiaire, i.e. réduire le nombre d'éléments de la matrice tout en gardant le mieux possible l'information contenu dans la matrice.

L'auto-encodeur peut produire en sortie, à partir de la matrice compressée, une matrice avec les mêmes dimensions que la matrice d'entrée, et déterminer un écart entre l'image d'entrée et l'image de sortie.

L'auto-encodeur peut s'entraîner et apprendre à identifier une matrice représentative d'un ensemble de chemins « normaux ». Lorsque la matrice d'entrée contient une anomalie, il est probable que cette anomalie ne soit pas reproduite dans la matrice de sortie, ce qui produit un écart entre la matrice de sortie et la matrice d'entrée.

L'analyse de l'écart, et notamment la comparaison de l'écart à un seuil, peut permettre de détecter la présence ou l'absence d'une anomalie dans la matrice d'entrée.

Dans un mode de réalisation, l'auto-encodeur spatio-temporel implémente un apprentissage préalablement effectué sur au moins un autre préfixe d'adresses, dit apprentissage par transfert.

Lorsqu'un auto-encodeur a « appris » à reconnaître des anomalies dans des matrices dans un environnement de systèmes autonomes donnés et pour un préfixe donné, les connaissances acquises peuvent être transposées dans un autre auto-encodeur pour l'application du procédé dans un autre environnement de systèmes autonomes et à un autre préfixe.

Ainsi, il n'est pas nécessaire pour chaque nouvel auto-encodeur de s'entraîner. Un nouvel encodeur peut appliquer directement les connaissances acquises antérieurement par un autre auto-encodeur dans un nouvel environnement de systèmes autonomes et de préfixes.

L'affectation d'un nouvel index à chaque système autonome nouvellement découvert dans les annonces des tronçons de chemin, et l'incrémentation d'un index initial à chaque découverte d'un nouveau système autonome intervenant dans un desdits tronçons, tel que décrit précédemment, est particulièrement avantageux dans la mise en oeuvre d'un apprentissage par transfert.

En effet, les mêmes canevas généraux d'éléments apparaissent dans différents environnements de systèmes autonomes et de préfixes, lorsque l'affectation d'un nouvel index et l'incrémentation d'un index initial tel que décrit est respecté.

L'apprentissage par transfert peut donc être facilité, et la durée d'adaptation d'un auto-encodeur à un nouvel environnement de systèmes autonomes et de préfixes peut être réduite.

Dans un mode de réalisation, aucune dimension de matrice n'est supérieure à 1/500 d'un nombre total de systèmes autonomes existants.

L'Internet est composé de dizaines de millier de systèmes autonomes, approximativement 65.000 systèmes autonomes.

Cependant, il n'est pas nécessaire que les première et deuxième dimensions de chaque matrice comprennent des dizaines de millier d'éléments, représentatifs de tous les systèmes autonomes dans l'Internet.

Pour un préfixe d'adresses donné, le nombre de systèmes autonomes présents sur un chemin annoncé à destination d'un système autonome local est limité, et n'est habituellement pas supérieur à 1/500 du nombre total de systèmes autonomes existants, correspondant actuellement à 130 systèmes autonomes.

Pour un préfixe donné, le volume de données générées relatives aux chemins annoncés est donc limité, permettant d'obtenir une vision claire et rapide des chemins annoncés.

Dans un mode de réalisation, les informations reçues selon l'étape /a/ sont comprises dans des messages de type BGP pour « Border Gateway Protocol ».

Les messages de type BGP, i.e. des mises à jour BGP, fournissent des informations relatives aux chemins annoncés, relatives à des changements dans des chemins annoncés, etc., permettant d'obtenir les informations requises pour générer les matrices selon l'étape /b/.

Dans un mode de réalisation, les informations reçues selon l'étape /a/ comprennent au moins un attribut « AS Path » représentatif respectivement de systèmes autonomes se trouvant sur un chemin annoncé.

L'attribut AS PATH représente la séquence des systèmes autonomes par lesquels l'information de routage a transité.

Par exemple, un chemin qui passe dans l'ordre par trois systèmes autonomes AS11, AS1 et AS56 peut être représenté par l'attribut AS PATH comme AS PATH = [AS56 AS1 AS11].

L'attribut AS PATH permet d'encoder les informations requises pour la génération des matrices selon l'étape /d/.

Un autre aspect de la divulgation concerne un dispositif informatique pour détecter une anomalie dans un ensemble de chemins pour le routage de données à destination d'un préfixe d'adresses dans un réseau composé de systèmes autonomes, les chemins étant annoncés à un système autonome local par des systèmes autonomes voisins du système autonome local, le dispositif comprenant :
* une interface pour recevoir pendant un laps de temps des informations représentatives d'au moins une partie de l'ensemble de chemins ;
* un circuit pour générer, à partir des informations reçues, une matrice comprenant des éléments représentatifs de tronçons de chemin de l'ensemble de chemins, les tronçons de chemin reliant respectivement des paires de systèmes autonomes se trouvant sur l'ensemble de chemins ;
* un circuit pour réitérer la réception et la génération afin d'obtenir une séquence temporelle de matrices comprenant des éléments représentatifs de tronçons de chemin de l'ensemble de chemins ;
* un circuit pour analyser une similarité entre les matrices de la séquence, et
* un circuit pour détecter une anomalie de routage dans un cas où au moins une des matrices de la séquence diffère des autres matrices de la séquence.

Le dispositif informatique peut comprendre ou être incorporé à un routeur BGP du système autonome local et collecter les informations représentatives d'au moins une partie de l'ensemble de chemins.

Le dispositif informatique peut également être ou comprendre tout autre dispositif auquel les données collectées sont transmises.

Le dispositif informatique peut être configuré pour mettre en oeuvre le procédé précité.

Le dispositif informatique vise à répondre aux inconvénients cités précédemment et être configuré pour détecter une anomalie dans un ensemble de chemins pour le routage de données à destination d'un préfixe d'adresses dans un réseau composé de systèmes autonomes.

Le dispositif informatique peut effectuer une analyse spatio-temporelle des informations reçues, dans le sens où il est pris en compte la présence ou l'absence d'un tronçon de chemin parmi l'ensemble de chemins (« analyse spatiale ») ainsi que l'évolution temporelle des chemins annoncés des tronçons de chemin (« analyse temporelle »).

Le dispositif informatique est innovant sur la mise en oeuvre d'une analyse spatio-temporelle des informations reçues.

Le dispositif informatique est, de plus, original en ce qu'il utilise des données non étiquetées et en ce que les actions effectuées ne sont pas supervisées, permettant une meilleure généralisation des analyses effectuées.

Le dispositif informatique ne requiert aucune connaissance préalable sur les propriétés du système, ex. sur les systèmes autonomes impliqués ou sur la nature des chemins annoncés. Le dispositif informatique peut apprendre quels types de matrices représentent respectivement un état « normal » ou une « anomalie ».

Le dispositif informatique considère un seul préfixe et non pas un système autonome ou plusieurs préfixes confondus, permettant une analyse ciblée et une détection localisée d'une anomalie.

Lorsqu'une anomalie est détectée, le dispositif informatique peut émettre une alerte.

Le dispositif informatique peut améliorer la sécurité dans les réseaux et mitiger le détournement du trafic dans l'Internet. En outre, il peut être pris des mesures au regard des chemins qui constituent une anomalie d'une matrice à anomalie. Par exemple dans le cas où certains des systèmes autonomes peuvent être contrôlés par un administrateur, la table de routage d'au moins un des systèmes autonomes locaux, contrôlés, peut être modifiée si un deuxième système, non contrôlé et suspect, partage un chemin à anomalie avec le système contrôlé. En effet, un routeur BGP du système autonome local comprenant une table d'entrée où sont insérées les chemins reçus des voisins, une table centrale utilisée pour acheminer les paquets, et une table de sortie pour les annonces faites aux voisins, si un chemin est jugé anormal par le dispositif, le routeur BGP peut ne pas le propager de la table d'entrée à la table centrale.

Un autre aspect de la divulgation concerne un produit programme informatique comportant des instructions qui, lorsque ces instructions sont exécutées par un processeur, conduisent celui-ci à mettre en oeuvre les étapes du procédé précité.

Ce programme peut utiliser n'importe quel langage de programmation (par exemple, un langage-objet ou autre), et être sous la forme d'un code source interprétable, d'un code partiellement compilé ou d'un code totalement compilé.

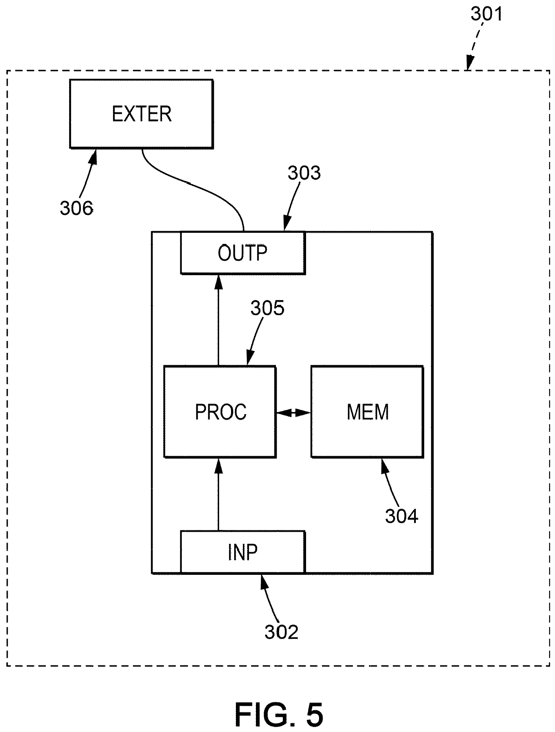

La figure 5 décrite en détail ci-après peut former l'organigramme de l'algorithme général d'un tel programme informatique.

### Brève description des dessins

D'autres caractéristiques, détails et avantages apparaîtront à la lecture de la description détaillée ci-après, et à l'analyse des dessins annexés, sur lesquels :
**Fig. 1**
   [Fig. 1] montre une pluralité de systèmes autonomes interconnectés par des chemins permettant d'envoyer du trafic à destination d'un préfixe d'adresses.
**Fig. 2**
   [Fig. 2] montre un ordinogramme d'un procédé de détection d'une anomalie dans un ensemble de chemins pour le routage de données à destination d'un préfixe d'adresses dans un réseau composé de systèmes autonomes selon la fig. 1.
**Fig. 3a** **et** **Fig. 3b**
   [Fig. 3a] et [Fig. 3b] représentent deux images générées par le procédé selon la fig. 2 et représentatives respectivement d'un état normal de chemins annoncés à destination d'un préfixe et d'une anomalie.
**Fig. 4**
   [Fig. 4] montre un mode de réalisation d'un auto-encodeur configuré pour détecter une anomalie dans des séquences d'images selon les figures 3a et 3b.
**Fig. 5**
   [Fig. 5] montre un dispositif informatique adapté pour détecter une anomalie dans un ensemble de chemins pour le routage de données à destination d'un préfixe d'adresses dans un réseau composé de systèmes autonomes.

### Description des modes de réalisation

L'Internet est composé de systèmes autonomes, ensembles de réseaux et routeurs sous une même autorité administrative. Différents systèmes autonomes peuvent être interconnectés par des chemins pour transporter du trafic sous forme de paquets de données, et des routeurs BGP (pour « Border Gateway Protocol ») mettant en oeuvre un protocole BGP, ayant comme objectif d'échanger des informations de routage et d'accessibilité de réseaux informatiques dont les autorités administratrices des systèmes autonomes sont responsables.

Pour permettre l'envoi de trafic d'un système autonome à l'autre, chaque système autonome peut annoncer des préfixes d'adresses dont il est responsable aux systèmes autonomes voisins.

La figure 1 montre une pluralité de systèmes autonomes AS1, AS2, AS3, AS4, AS5 interconnectés respectivement par des tronçons chemin I₂₁, I₄₂, I₄₃, I₃₁, I₅₁, I₂₅.

Le système autonome AS1 est responsable d'un préfixe d'adresses P et peut annoncer ce préfixe d'adresses P dans l'Internet.

En l'espèce, AS1 a trois systèmes autonomes voisins AS2, AS3, AS5, i.e. trois systèmes autonomes auquel il est connecté sans devoir passer par d'autres autres systèmes autonomes.

Le système autonome AS1 peuvent annoncer le préfixe P à tout ou partie de ses voisins AS2, AS3, AS5.

Lorsque le préfixe est annoncé à AS2, AS3 et AS5, ces systèmes autonomes peuvent faire de même et annoncer le préfixe P à tout ou partie de leurs voisins, en l'espèce aux systèmes autonomes AS2, AS5, AS4.

Lorsque AS2, AS3 et AS5 disposent de plusieurs chemins possibles pour rejoindre le préfixe P, AS2, AS3, et AS5 peuvent annoncer uniquement leur « meilleur » chemin à leurs voisins. Par exemple, AS2 dispose d'un chemin direct vers AS1 et d'un chemin indirect qui passe par AS5. Lorsque le chemin direct d'AS2 vers AS1 est préféré, AS2 peut annoncer uniquement ce chemin direct à AS4, et AS4 n'a pas connaissance du chemin qui passe par AS5.

Ainsi, le système autonome AS4 dispose de deux chemins lui permettant de rejoindre le préfixe P. Un premier chemin passe par AS2, et un second chemin passe par AS3.

En outre, il peut exister plusieurs chemins entre deux mêmes systèmes autonomes (non montrés dans la fig. 1).

Les critères qui entrent en jeu pour la prise de décision relative au chemin annoncé sont pour partie transportés sous la forme d'attributs BGP dans des messages de mise à jour que s'envoient les systèmes autonomes, et pour partie configurés sur des routeurs BGP de chaque système autonome.

Le « meilleur » chemin peut être déterminé en fonction des attributs BGP, tels que LOCAL PREF ou AS PATH.

L'attribut LOCAL PREF est configuré sur un routeur BGP et renseigne le routeur sur l'intérêt à passer par tel ou tel voisin. Par exemple, lorsque AS4 et AS3 sont des fournisseurs et AS2 est un client, AS4 peut avoir intérêt à passer par AS2 au lieu de passer par AS3.

L'attribut AS PATH représente la séquence des systèmes autonomes par lesquels l'information de routage a transité, i.e. la séquence des systèmes autonomes se trouvant sur un chemin annoncé.

Lorsqu'un routeur BGP annonce une information de routage à destination d'un autre système autonome, il ajoute son propre numéro de système autonome à la séquence d'AS PATH, permettant d'éviter les boucles de routage.

À LOCAL PREF égaux, un routeur choisit le chemin dont l'AS PATH est le plus court ; il s'agit alors de minimiser les distances entre systèmes autonomes à franchir pour joindre la destination.

En outre, le « meilleur » chemin peut être déterminé en fonction de la manière dont un système autonome annonce des préfixes d'adresse. Lorsqu'un système autonome local détermine son « meilleur » chemin à destination d'une adresse donnée, ex. 11.0.0.5, si la table de routage du système autonome local indique deux préfixes d'adresses, ex. 11.0.0.0/24 et 11.0.0.0/16, qui permettent de rejoindre l'adresse 11.0.0.5, le système autonome local est généralement programmé pour choisir le chemin qui passe par le préfixe d'adresses 11.0.0.0/24, car plus spécifique que 11.0.0.0/16. Un système autonome local « pirate » programmé pour une intrusion typiquement peut présenter alors un préfixe d'adresse plus spécifique en /24 par exemple pour dérouter une partie du trafic.

Afin de détecter si les chemins annoncés à destination du système autonome local AS4 comportent une anomalie, AS4 peut mettre en oeuvre un procédé de détection d'une anomalie dans les chemins entre AS4 et le préfixe P, tel qu'illustré par la figure 2. Le procédé peut être mis en oeuvre par un dispositif informatique 301 tel que décrit par la figure 5.

Dans une première étape 101, AS1 peut annoncer un ou plusieurs chemins pour rejoindre le préfixe à ses voisins AS2, AS3 et AS5. Ensuite, AS2, AS3 et AS5 peuvent annoncer leur chemin pour rejoindre le préfixe P à AS4.

AS4 reçoit pendant un laps de temps des informations représentatives des chemins annoncés. Le laps de temps est typiquement de l'ordre de plusieurs minutes, par exemple 5 minutes. Toutefois, des laps de temps plus courts ou plus longs peuvent être envisagés.

Le procédé peut comprendre une ou plusieurs étapes préliminaires de traitement liés au filtrage ou à l'augmentation des données comprises dans les informations reçues.

Les informations reçues par le système autonome local AS4 peuvent comprendre des attributs BGP, notamment l'attribut AS PATH.

L'attribut AS PATH qu'AS4 reçoit par AS3 est donc AS PATH = [AS3 AS1], car le « meilleur » chemin pour AS3 pour rejoindre le préfixe P correspond au chemin direct entre AS3 et AS1.

L'attribut AS PATH qu'AS4 reçoit par AS2 est AS PATH = [AS2 AS1], lorsque le « meilleur » chemin pour AS2 pour rejoindre le préfixe P est le chemin direct qui ne passe pas par AS5.

AS4 peut donc recevoir deux attributs AS PATH correspondant aux chemins annoncés de ses voisins : AS PATH = [AS3 AS1], correspondant au chemin annoncé par AS3, et AS PATH = [AS1 AS2], correspondant au chemin par AS2.

Il peut être affecté un nouvel index à chaque système autonome nouvellement découvert dans les annonces desdits tronçons, un index initial étant incrémenté à chaque découverte d'un nouveau système autonome intervenant dans un desdits tronçons.

Si l'attribut AS PATH = [AS3 AS1] est reçu dans un premier temps et l'attribut AS PATH = [AS1 AS2] dans un second temps, le premier système autonome découvert est AS3, le deuxième système découvert est AS1, et le troisième systèmes autonome découvert est AS2. A ce stade, AS4 peut ne pas avoir connaissance de l'existence d'AS5.

Les systèmes autonomes peuvent donc être indexés, par exemple : AS4 : 0 (car AS4 est à l'origine des chemins) ; AS3 = 1 ; AS1 = 2 ; AS2 = 3 ; AS5 = 4.

Dans une deuxième étape 102, les chemins reçus par AS4 dans le laps de temps sont agrégés dans une image (ou plus généralement une matrice), i.e. il est généré, à partir des informations reçues, une image comprenant des pixels (ou plus généralement des éléments de matrice) représentatifs de tronçons de chemin de l'ensemble de chemins. Les tronçons de chemin relient respectivement des paires de systèmes autonomes voisins qui se trouvent sur l'ensemble de chemins.

L'image déterminée dans la deuxième étape 102 peut comprendre plusieurs dimensions. Une première dimension peut comprendre les indexes, i.e. des identifiants des systèmes autonomes de départ des tronçons de chemin, en l'espèce 0, 1, 2, 3, et une deuxième dimension peut comprendre les indexes des systèmes autonomes d'arrivée des tronçons de chemin, en l'espèce 0, 1, 2, 3.

Les couleurs des pixels de l'image (ou plus généralement les valeurs des éléments de la matrice) permettent d'indiquer si les informations reçues comprennent un tronçon de chemin donné ou pas. Par exemple, l'image peut être initialisée avec tous les pixels blancs (ou plus généralement en établissant toutes les valeurs des éléments de la matrice à « 0 »). Les couleurs des pixels (ou plus généralement les valeurs des éléments de matrice) représentatifs des tronçons de chemin qui font partie des chemins annoncés peuvent par la suite être établis à une autre couleur, par exemple noire (ou, pour le cas d'une matrice à une autre valeur, par exemple « 1 »).

En l'espèce, les paires suivantes de systèmes autonomes correspondent à des tronçons de chemin qui font partie du chemin annoncé : (AS1, AS2), (AS2, AS4), (AS1, AS3), (AS3, AS5).

Par conséquent, seulement les pixels avec les paires d'indexes (2, 3), (3, 0), (2, 1), (1, 4) ont une valeur égale à « 1 », selon l'indexation introduite ci-dessus.

Dans une troisième étape 103, les première 101 et deuxième 102 étapes peuvent être réitérées afin d'obtenir une séquence temporelle d'images selon la deuxième étape 102, i.e. une vidéo.

Cette réitération peut être faite en continu, ou jusqu'à obtention d'un nombre d'images déterminé.

On peut supposer que pendant une courte période le chemin direct entre AS2 et AS1 est bouleversé, provoqué par exemple par une attaque ou une panne, et que le chemin passe maintenant par AS5.

Pendant ce laps de temps, le tronçon de chemin (AS1, AS2) disparaît des annonces de chemin, et les nouveaux tronçons (AS5, AS2) et (AS1, AS5) apparaissent.

Le système autonome AS5 nouvellement découvert par AS4 a comme index AS5 : 4 (selon l'incrémentation des indexes telle que décrite précédemment).

Dans une quatrième étape 104, le dispositif informatique 301 peut analyser une similarité entre les images de la séquence, et découvrir qu'une image de la séquence diffère de la plupart des autres images en ce qu'elle comprend les nouveaux tronçons (AS2, AS5) et (AS5, AS1), mais pas le tronçon (AS2, AS1).

L'analyse d'une similarité peut comprendre une estimation d'une tendance moyenne sur au moins des images de la séquence temporelle de images, et une estimation d'écart d'une image courante de la séquence par rapport à ladite tendance moyenne.

Dans une cinquième étape 105, si l'écart estimé est au-delà d'un seuil, une anomalie de routage peut être détectée.

Suite à la détection de l'anomalie, une alerte peut être émise.

La quatrième étape 104 et la cinquième étape 105 peuvent être réalisées par une intelligence artificielle qui peut faire partie du dispositif informatique 301.

En particulier, un auto-encodeur spatio-temporel est spécialement adapté pour détecter une anomalie dans une séquence d'images. Le principe de l'auto-encodeur est expliqué dans le cadre de la figure 4.

Les figures 3a et 3b montrent deux images générées par le procédé selon la fig. 2, représentatives de chemins annoncés à destination d'un préfixe et classifiées respectivement comme « normal » (fig. 3a) et « anomalie » (fig. 3b).

Chaque image représente des chemins reçus pendant un laps de temps. Pour la génération de chacune des images, des données relatives à des chemins annoncés sont accumulées et agrégé dans une image. L'image de selon la fig. 3a correspond aux chemins annoncés pendant un laps de 5 minutes, et la fig. 3b représentent les chemins annoncés pendant un autre laps de 5 minutes.

L'axe horizontal de chaque image représente les systèmes autonomes de départ d'un tronçon de chemin, et l'axe vertical représente les systèmes autonomes d'arrivé.

Les axes peuvent être bien évidemment inversés. Toutefois, il est crucial de garder la même convention pour toutes les images d'une séquence d'image.

Chaque pixel d'une image peut avoir deux valeurs, représentées comme « noir » et « blanc ». Un pixel « noir » représente un tronçon de chemin qui fait partie de l'ensemble de chemins. Un pixel « blanc » montre un tronçon de chemin qui ne fait pas partie de l'ensemble de chemins.

Différentes images représentatives chacune d'un état normal peuvent présenter des différences entre elles. Cependant, les images classifiées comme « normal » ont des caractéristiques de base en commun. Les pixels de chaque image « normale » constituent un canevas récurrent.

L'image selon la fig. 3b comprend plusieurs pixels (encerclés) éloignés de la plupart des autres pixels, et qui ne sont pas présents dans l'image selon la fig. 3a. L'auto-encodeur peut donc détecter une anomalie sur la base de ces pixels éloignés de la plupart des autres pixels.

Dans une variante (non montrée sur les figures 3a et 3b), l'image peut être à au moins trois dimensions. Par exemple, chaque pixel de l'image peut avoir une couleur propre à un type de système autonome d'arrivée, l'attribut couleur représentant alors la troisième dimension.

Chaque pixel peut encoder, outre la présence ou l'absence d'une paire de systèmes autonomes sur un chemin, d'autres caractéristiques telles que le pays d'origine des systèmes autonomes.

Par exemple, lorsque les couleurs « noir » et « blanc » sont utilisées pour indiquer la présence ou l'absence d'un système autonome, des nuances de « gris » ou d'autres couleurs peuvent être utilisées afin d'encoder un pays d'origine d'un système autonome d'arrivé sur un tronçon de chemin, ou des attributs qui caractérisent ce tronçon de chemin, indiquant par exemple la nature des systèmes autonomes (client, fournisseur, peer) connecté par un tronçon de chemin donné.

L'Internet est composé de dizaines de milliers de systèmes autonomes, approximativement 65.000 systèmes autonomes.

Typiquement, aucune dimension d'une image n'est supérieure à 1/500 du nombre total de systèmes autonomes existants, correspondant actuellement à 130 systèmes autonomes, car le nombre de systèmes autonomes présents sur les chemins annoncés à un système autonome local pour rejoindre un préfixe est limité. Cependant, un nombre supérieur à 130 peut être utilisé si nécessaire.

La fig. 4 montre un mode de réalisation d'un auto-encodeur 200 convolutionnel LSTM (pour « Long short-term memory »).

Ce type d'auto-encodeur 200 est spécialement adapté pour reconnaître des structures dans des séquences d'images en explorant simultanément des structures spatiales et des structures temporelles, i.e. des structures spatio-temporelles, et pour détecter ainsi des anomalies dans des séquences d'images telles que montrées dans la fig. 3b.

Un auto-encodeur 200 comprend une couche d'entrée 201, une couche de sortie 203, et une ou plusieurs couches cachées 202 disposées l'une après l'autre en série et situées en aval de la couche d'entrée 201 et en amont de la couche de sortie 203.

Chacune de ces couches 201, 202, 203 comprend des noeuds. Les noeuds de la couche d'entrée 201 peuvent être configurés pour recevoir l'image à analyser, et pour transmettre les données reçues à aux couches cachées 202 situées en aval de la couche d'entrée 201. Typiquement, les couches d'entrée 201 et de sortie 203 comprennent chacune autant de noeuds que de pixels compris dans l'image d'entrée.

L'auto-encodeur 200 comprend une composante appelée « encodeur » configuré pour générer, à partir de l'image d'entrée, une représentation compressée de l'image d'entrée, et une composante appelée « décodeur », configuré pour reconstruire l'image d'entrée à partir de la représentation compressée compensant le mieux possible la perte d'information provoquée par la compression de l'image.

Le nombre de noeuds de chacune des couches cachées 202 est inférieur au nombre de noeuds des couches d'entrée 201 et de sortie 203, ce qui provoque l'origine de la compression de l'image d'entrée

Dans une période d'apprentissage, l'auto-encodeur 200 peut recevoir une pluralité d'images d'entrée sans anomalie, et essayer de reconstruire une image de sortie de sorte à minimiser l'écart entre l'image d'entrée et l'image de sortie.

Lors de l'apprentissage, l'encodeur et le décodeur collaborent afin de trouver la méthode la plus efficace afin de compresser l'image d'entrée.

L'auto-encodeur 200 ne nécessite pas d'étiquetage des images d'entrée. Lors de la mise en oeuvre du procédé, l'auto-encodeur traite les images d'entrée telles que reçues et commence immédiatement à analyser l'image et à reconnaître des structures spatiales et temporelles dans les images.

L'auto-encodeur 200 apprend ainsi à détecter des structures spatiales et temporelles dans la séquence d'images, et à trouver une représentation compressée efficace qui lui permet de reconstruire une image de sortie tout en minimisant l'écart entre l'image de sortie et l'image d'entrée.

Les images d'entrée qui ne présentent pas d'anomalie ont des structures et caractéristiques communes de nature non-aléatoires qui sont reconnues par l'auto-encodeur 200.

Lorsque l'image d'entrée contient une anomalie, l'auto-encodeur 200 n'est pas capable de reconstruire cette anomalie dans l'image de sortie.

L'auto-encodeur 200 évalue ensuite l'erreur de reconstruction de l'image d'entrée par la couche de sortie 203. L'erreur de reconstruction peut correspondre à une mesure d'écart entre l'image de sortie et l'image d'entrée, et peut être interprété comme un « score d'anomalie ».

Un écart inférieur à un seuil signifie que l'auto-encodeur 200 a réussi à reconstruire correctement l'image d'entrée dans la couche de sortie. Dans ce cas, l'auto-encodeur 200 peut conclure que l'image d'entrée ne présente pas d'anomalie.

Si l'écart est supérieur à un seuil, l'auto-encodeur 200 peut conclure que l'image d'entrée contient une anomalie, car l'auto-encodeur 200 n'a pas réussi à reconstruire l'image correctement.

Le seuil peut être prédéterminé ou être déterminé par l'auto-encodeur 200 lors de la mise en oeuvre du procédé.

En l'espèce, l'auto-encodeur 200 est configuré (suite à une période d'apprentissage) pour reproduire des images telles que montrées dans la fig. 3a. Les pixels encerclés dans la fig. 3b constituent une anomalie et ne sont pas reproduits ou reproduits de manière différente dans l'image de sortie, et il y a donc un écart entre l'image d'entrée et l'image de sortie. L'écart peut dépasser un seuil, et l'image selon la fig. 3b est alors classifiée comme « anomalie ».

L'auto-encodeur 200 peut comprendre deux composantes principales, une pour l'apprentissage de structures spatiales dans les images, et une autre pour l'apprentissage de l'évolution temporelle des structures spatiales.

Avantageusement, un codeur spatial peut se composer de deux couches cachées 202 convolutives, et un décodeur spatial de deux couches cachées 202 convolutives transposées.

Un codeur-décodeur temporel peut être composé de trois couches cachées 202 LSTM convolutives, situées entre le codeur spatial et le décodeur spatial.

L'information relative à la compression d'image est stockée dans les couches cachées 202.

Par conséquent, un apprentissage par transfert peut être implémenté en transposant les couches cachées 202 d'un auto-encodeur 200 configuré pour reconnaître des anomalies dans des images dans un nouvel auto-encodeur 200, qui peut ensuite reconnaître le même type d'anomalie dans un nouvel environnement de systèmes autonomes et de préfixes.

En effet, les mêmes canevas généraux peuvent apparaître dans les images, même lorsque l'environnement de systèmes autonomes et de préfixes change, notamment lorsque l'affectation d'un nouvel index et l'incrémentation d'un index initial tel que décrit précédemment est respecté.

L'apprentissage peut être fait en continu lors de la mise en oeuvre du procédé. L'auto-encodeur 200 peut ainsi s'adapter à des changements dans son environnement, lorsque les chemins annoncés changent.

Par exemple, lorsque des accords entre différents systèmes autonomes sont modifiés, certains chemins sont modifiés de manière permanente, et l'auto-encodeur 200 peut apprendre à reconnaître et à classifier ce nouvel environnement comme « normal ».

La figure 5 montre un dispositif informatique 301 pour détecter une anomalie dans un ensemble de chemins pour le routage de données à destination d'un préfixe d'adresses dans un réseau composé de systèmes autonomes.

Le dispositif informatique 301 peut comprendre ou être incorporé à un routeur BGP du système autonome local qui collecte les informations représentatives d'au moins une partie de l'ensemble de chemins, ou à toute autre dispositif auquel les données collectées sont transmises.

Le dispositif informatique 301 est adapté pour mettre en oeuvre le procédé décrit par la figure 2.

Dans ce mode de réalisation, le dispositif informatique 301 comporte au moins une interface d'entrée 302 pour la réception de messages ou instructions, et au moins une interface de sortie 303 pour la communication avec des dispositifs externes 306 tels qu'un ou plusieurs systèmes autonomes voisins ou les routeurs BGP interconnectant les systèmes autonomes.

L'au moins une interface d'entrée 302 peut être configurée pour recevoir à l'étape 101 pendant un laps de temps des informations représentatives d'au moins une partie de l'ensemble de chemins.

Le dispositif informatique 301 comprend en outre une mémoire 304 pour stocker des instructions permettant la mise en oeuvre d'une partie au moins du procédé, les données reçues, et des données temporaires pour réaliser les différentes étapes 101, 102, 103, 104, 105 et opérations du procédé telles que décrites précédemment.

Le dispositif informatique 301 comporte en outre plusieurs circuits de traitement 305. Chaque circuit peut être, par exemple :
- un processeur apte à interpréter des instructions sous la forme de programme informatique, ou
- une carte électronique, les étapes 101, 102, 103, 104, 105 et opérations du procédé de la divulgation pouvant être décrites dans le silicium, ou encore
- une puce électronique programmable comme une puce FPGA pour « *Field-Programmable Gate Array* » en anglais, comme un SOC pour « *System On Chip* » en anglais ou comme un ASIC pour « *Application Specific Integrated Circuit* » an anglais.

Les SOC ou systèmes sur puce sont des systèmes embarqués qui intègrent tous les composants d'un système électronique dans une puce unique. Un ASIC est un circuit électronique spécialisé qui regroupe des fonctionnalités sur mesure pour une application donnée. Les ASIC sont généralement configurés lors de leur fabrication et ne peuvent être que simulés par un opérateur du dispositif informatique 301. Les circuits logiques programmables de type FPGA sont des circuits électroniques reconfigurables par l'opérateur du dispositif informatique 301.

Chaque circuit de traitement 305 peut être configuré pour :
- générer 102, à partir des informations reçues, une image (ou plus généralement d'une matrice ci-après) comprenant des éléments représentatifs de tronçons de chemin de l'ensemble de chemins, les tronçons de chemin reliant respectivement des paires de systèmes autonomes se trouvant sur l'ensemble de chemins ;
- réitérer 103 la réception 101 et la génération 102 afin d'obtenir une séquence temporelle d'images comprenant des éléments représentatifs de tronçons de chemin de l'ensemble de chemins ;
- analyser 104 une similarité entre les images de la séquence, et
- dans un cas où au moins une des images de la séquence diffère des autres images de la séquence, détecter 105 une anomalie de routage.

Le dispositif informatique 301 peut comprendre une intelligence artificielle configurée pour apprendre à analyser une similarité entre les images de la séquence, et dans un cas où au moins une des images de la séquence diffère des autres images de la séquence, détecter une anomalie de routage.

En fonction du mode de réalisation, le dispositif informatique 301 peut être un ordinateur, un réseau d'ordinateurs, un composant électronique, ou un autre appareil comportant un processeur couplé de manière opérationnelle à une mémoire, ainsi que, selon le mode de réalisation choisi, une unité de stockage de données, et d'autres éléments matériels associés comme une interface de réseau et un lecteur de support pour lire un support de stockage amovible et écrire sur un tel support non représentés sur la figure 5. Le support de stockage amovible peut être, par exemple, un disque compact CD, un disque vidéo/polyvalent numérique DVD, un disque flash, une clé USB, etc.

En fonction du mode de réalisation, la mémoire 304, l'unité de stockage de données ou le support de stockage amovible contiennent des instructions qui, lorsqu'elles sont exécutées par le circuit de traitement 305, amènent ce circuit à effectuer ou contrôler l'au moins une interface d'entrée 302, l'au moins une interface de sortie 303, le stockage de données dans la mémoire 304 et/ou le traitement de données et/ou la mise en oeuvre d'au moins une partie du procédé selon la figure 2.

Chaque circuit de traitement 305 peut être un composant implémentant le pilotage du dispositif informatique 301.

En outre, le dispositif informatique 301 peut être mis en oeuvre sous forme logicielle, auquel cas il prend la forme d'un programme exécutable par un processeur, ou sous forme matérielle, ou « *hardware* », comme un circuit intégré spécifique application ASIC, un système sur puce SOC, ou sous forme d'une combinaison d'éléments matériels et logiciels, par exemple un programme logiciel destiné à être chargé et exécuté sur un composant électronique décrit ci-avant tel que FPGA, processeur.

Le dispositif informatique 301 peut également utiliser des architectures hybrides, par exemple des architectures basées sur un CPU+FPGA, un GPU pour « *Graphics Processing Unit* » ou un MPPA pour « *Multi-Purpose ProcessorArray* ».

La présente divulgation permet de détecter une anomalie dans un ensemble de chemins pour le routage de données à destination d'un préfixe d'adresses dans un réseau composé de systèmes autonomes.

La présente divulgation ne se limite pas aux exemples de dispositifs, systèmes, procédés, utilisations et produits programmes informatiques décrits ci-avant, seulement à titre d'exemple, mais elle englobe toutes les variantes que pourra envisager la personne du métier dans le cadre de la protection recherchée.

## Revendications

1. Procédé de détection d'une anomalie dans un ensemble de chemins pour le routage de données à destination d'un préfixe d'adresses (P) dans un réseau composé de systèmes autonomes (AS1, AS2, AS3, AS4, AS5), les chemins étant annoncés à un système autonome local (AS4) par des systèmes autonomes voisins (AS2, AS3, AS5) du système autonome local (AS4), le procédé comprenant :
/a/ recevoir (101) pendant un laps de temps des informations représentatives d'au moins une partie de l'ensemble de chemins ;
/b/ générer (102), à partir des informations reçues, une matrice comprenant des éléments représentatifs de tronçons de chemin (I₄₂, I₂₁, I₄₃, I₃₁, I₂₅, I₅₁) de l'ensemble de chemins, les tronçons de chemin (I₄₂, I₂₁, I₄₃, I₃₁, I₂₅, I₅₁) reliant respectivement des paires de systèmes autonomes (AS1, AS2, AS3, AS4, AS5) se trouvant sur l'ensemble de chemins ;
Ici réitérer (103) les étapes /a/ et /b/ afin d'obtenir une séquence temporelle de matrices selon l'étape /b/ ;
/d/ analyser (104) une similarité entre les matrices de la séquence, et
/e/ dans un cas où au moins une des matrices de la séquence diffère des autres matrices de la séquence, détecter (105) une anomalie de routage.

2. Procédé selon la revendication 1, dans lequel l'étape /d/ comprend :
- une estimation d'une tendance moyenne sur des matrices de la séquence temporelle de matrices,
- une estimation d'écart d'une matrice courante de la séquence par rapport à ladite tendance moyenne,
et, à l'étape /e/ :
- si l'écart estimé est au-delà d'un seuil, détecter une anomalie de routage révélée par ladite matrice courante.

3. Procédé selon l'une quelconque des revendications précédentes, dans lequel la matrice déterminée dans l'étape /b/ est à au moins deux dimensions et comprend des éléments, chacun propre à :
- un index de système autonome de départ (AS2, AS3, AS4, AS5) de tronçon de chemin (I₄₂, I₂₁, I₄₃, I₃₁, I₂₅, I₅₁) annoncé, selon une première dimension, et
- à un index de système autonome d'arrivée (AS1, AS2, AS3, AS5) dudit tronçon de chemin (I₄₂, I₂₁, I₄₃, I₃₁, I₂₅, I₅₁) annoncé, selon une deuxième dimension.

4. Procédé selon la revendication 3, dans lequel il est affecté un nouvel index à chaque système autonome (AS1, AS2, AS3, AS4, AS5) nouvellement découvert dans les annonces desdits tronçons (I₄₂, I₂₁, I₄₃, I₃₁, I₂₅, I₅₁), un index initial étant incrémenté à chaque découverte d'un nouveau système autonome (AS1, AS2, AS3, AS4, AS5) intervenant dans un desdits tronçons (I₄₂, I₂₁, I₄₃, I₃₁, I₂₅, I₅₁).

5. Procédé selon l'une quelconque des revendications 3 et 4, dans lequel la matrice est à au moins trois dimensions, chaque élément de la matrice étant propre en outre à un type de système autonome d'arrivée (AS1, AS2, AS3, AS5), selon une troisième dimension.

6. Procédé selon l'une quelconque des revendications précédentes, dans lequel chaque matrice de la séquence est représentée sous forme d'une image à au moins deux dimensions, chaque image comportant des pixels, chaque pixel correspondant à un élément de la matrice.

7. Procédé selon la revendication 6, dans lequel chaque pixel a pour coordonnées dans l'image :
- un index de système autonome de départ (AS2, AS3, AS4, AS5) de tronçon de chemin (I₄₂, I₂₁, I₄₃, I₃₁, I₂₅, I₅₁) annoncé, selon un premier axe de coordonnées d'image, et
- un index de système autonome d'arrivée (AS1, AS2, AS3, AS5) dudit tronçon de chemin (I₄₂, I₂₁, I₄₃, I₃₁, I₂₅, I₅₁) annoncé, selon un deuxième axe de coordonnées d'image.

8. Procédé selon l'une quelconque des revendications 6 et 7, prise en combinaison avec l'une quelconque des revendications 3 à 5, dans lequel chaque pixel a une couleur fonction dudit type système autonome d'arrivée (AS1, AS2, AS3, AS5) dudit pixel.

9. Procédé selon l'une des revendications précédentes, dans lequel les étapes /d/ et /e/ sont réalisées par une intelligence artificielle.

10. Procédé selon la revendication 9, dans lequel l'intelligence artificielle est mise en oeuvre par un auto-encodeur (200) spatio-temporel mettant en oeuvre un apprentissage non supervisé configuré pour détecter une anomalie dans la séquence d'images.

11. Procédé selon la revendication 10, dans lequel l'auto-encodeur (200) spatio-temporel implémente un apprentissage préalablement effectué sur au moins un autre préfixe d'adresses, dit apprentissage par transfert.

12. Procédé selon l'une quelconque des revendications précédentes, dans lequel aucune dimension de matrice n'est supérieure à 1/500 d'un nombre total de systèmes autonomes existants.

13. Procédé selon l'une quelconque des revendications précédentes, dans lequel les informations reçues selon l'étape /a/ sont comprises dans des messages de type BGP pour « Border Gateway Protocol ».

14. Procédé selon l'une quelconque des revendications précédentes, dans lequel les informations reçues selon l'étape /a/ comprennent au moins un attribut « AS Path » représentatif respectivement de systèmes autonomes (AS1, AS2, AS3, AS4, AS5) se trouvant sur un chemin annoncé.

15. Dispositif informatique (301) pour détecter une anomalie dans un ensemble de chemins pour le routage de données à destination d'un préfixe d'adresses (P) dans un réseau composé de systèmes autonomes (AS1, AS2, AS3, AS4, AS5), les chemins étant annoncés à un système autonome local (AS4) par des systèmes autonomes voisins (AS2, AS3, AS5) du système autonome local (AS4), le dispositif comprenant :
* une interface (302) pour recevoir pendant un laps de temps des informations représentatives d'au moins une partie de l'ensemble de chemins ;
* un circuit (305) pour générer, à partir des informations reçues, une matrice comprenant des éléments représentatifs de tronçons de chemin (I₄₂, I₂₁, I₄₃, I₃₁, I₂₅, I₅₁) de l'ensemble de chemins, les tronçons de chemin (I₄₂, I₂₁, I₄₃, I₃₁, I₂₅, I₅₁) reliant respectivement des paires de systèmes autonomes (AS1, AS2, AS3, AS4, AS5) se trouvant sur l'ensemble de chemins ;
* un circuit (305) pour réitérer la réception et la génération afin d'obtenir une séquence temporelle de matrices comprenant des éléments représentatifs de tronçons de chemin (I₄₂, I₂₁, I₄₃, I₃₁, I₂₅, I₅₁) de l'ensemble de chemins ;
* un circuit (305) pour analyser une similarité entre les matrices de la séquence, et
* un circuit (305) pour détecter une anomalie de routage dans un cas où au moins une des matrices de la séquence diffère des autres matrices de la séquence.

16. Produit programme informatique comportant des instructions qui, lorsque ces instructions sont exécutées par un processeur, conduisent celui-ci à mettre en oeuvre les étapes du procédé selon l'une quelconque des revendications 1 à 14.
